Europäisches Patentamt

European Patent Office

Office européen des brevets

(11) Veröffentlichungsnummer: **0 021 209**
A1

(12) **EUROPÄISCHE PATENTANMELDUNG**

(21) Anmeldenummer: **80103184.0**

(51) Int. Cl.³: **B 05 B 15/04,** B 05 C 15/00

(22) Anmeldetag: **09.06.80**

(30) Priorität: **28.06.79 DE 2926040**

(43) Veröffentlichungstag der Anmeldung: **07.01.81**
**Patentblatt 81/1**

(84) Benannte Vertragsstaaten: **AT CH FR GB IT LI SE**

(71) Anmelder: **Lehmann, Ernst, Boppartshofstrasse 35,
CH-9014 St.Gallen (CH)**

(72) Erfinder: **Lehmann, Ernst, Boppartshofstrasse 35,
CH-9014 St.Gallen (CH)**

(74) Vertreter: **Vetter, Ewald O., Ing. grad.,
Philippine-Welser-Strasse 14, D-8900 Augsburg (DE)**

(54) **Kabine zum Sprühbeschichten.**

(57)    Sprühbeschichtungsvorrichtung, insbesondere für pulverförmiges bis körniges Beschichtungsmaterial, mit einer Beschichtungskabine. Am Kabinenboden anfallendes überschüssiges Pulver wird von einer Abführvorrichtung (2 bis 7) entfernt. Alle Kabinenwände, an denen Beschichtungsmaterial anfällt, sind durch endlose, antreibbare Bänder gebildet. Am unteren Teil der Bänder (11, 12; 51, 52, 55, 56) sind Reinigungsvorrichtungen (25, 26) zur Reinigung dieser Bänder angeordnet. Die Bänder können entweder kontinuierlich oder nur bei Bedarf angetrieben und gereinigt werden. Ein besonderer Bedarf liegt immer dann vor, wenn auf ein anderes Beschichtungsmaterial gewechselt wird.

-1-

Unser Az.: PA 110        Ernst Lehmann

31.5.1980

*BEZEICHNUNG GEÄNDERT siehe Titelseite*

<u>Sprühbeschichtungsvorrichtung</u>

Sprühbeschichtungsvorrichtung, insbesondere für
pulverförmiges bis körniges Beschichtungsmaterial,
mit einer Beschichtungskabine zur Aufnahme der
zu beschichtenden Gegenstände, die ein ihren Beschichtungsraum seitlich begrenzendes, antreibbares endloses Förderband mit einem im Beschichtungsraum nach unten laufenden Bandtrum sowie eine Abführvorrichtung für überschüssiges Beschichtungsmaterial
am Kabinenboden aufweist.

Es ist bekannt, daß beim Beschichten von Gegenständen
ein bestimmter Anteil von Beschichtungsmaterial
am Gegenstand vorbeigesprüht wird oder an ihm abprallt. Dieses Material ist aber nicht verloren,
sondern es kann über entsprechende Filter- und
Aufbereitungseinrichtungen zurückgewonnen
werden. Bei einem Wechsel des Beschichtungsmaterials,

-2-

insbesondere von einer Farbe auf eine andere Farbe
(Farbwechsel), müssen sämtliche Rückstände des zuvor
verwendeten Beschichtungsmaterials entfernt werden,
bevor mit einem neuen Material gesprüht werden kann,
weil sich sonst Beschichtungsfehler, insbesondere
Farbfehler, ergeben. Diese Reinigung beim Wechsel
des Beschichtungsmaterials hat unerwünschte Stillstandszeiten zur Folge.Beim Beschichten mit Pulver sollte
in der Kabine stets so wenig Pulver wie möglich vorhanden sein, weil größere Pulveransammlungen im Falle
der nachträglichen Aufwirbelung ein zündfähiges Luft-
Pulver-Gemisch bilden können.

Zur Lösung dieser Schwierigkeiten wurden bereits mehrere
Lösungsversuche unternommen:

a)  Ein den Kabinenboden bildendes Band. Hierzu ist
    es aus der US-PS 3 252 401 bekannt, ein den
    Kabinenboden bildendes endliches Band, welches
    herabfallendes überschüssiges Pulver aufnimmt,
    von einer Rolle abzuwickeln und auf eine andere
    Rolle aufzuwickeln sowie danach wegzuwerfen oder
    zu reinigen. Ein endloses umlaufendes Filterband
    als Kabinenboden zu verwenden ist aus der
    DE-PS 2 430 517 (US-PS 3 902 455) bekannt.
    Bei dieser Kabine ist eine Spezialreinigungsvorrichtung vorgesehen, welche aus dem Filterboden alle Pulverpartikel einer bestimmten
    Farbe heraussaugt. Ein solches Filterband unterhalb und oberhalb des mit Pulver belegten Bandabschnittes zu besaugen ist aus der DE-AS 2 546 920
    (US-PS 3 918 641) bekannt. Ein endloses undurch-
    lässiges Transportband zum heraustransportieren

-3-

des Pulvers aus der Kabine zu verwenden ist aus der
DE-OS 2 153 395 bekannt. Diese Anlagen haben jedoch
alle den Nachteil, daß die Wände und Decken der
Beschichtungskabine von Hand gereinigt werden müssen.

b) Ferner ist es bekannt, bei verhältnismäßig offenen
Beschichtungsplätzen, hinter den zu beschichtenden
Gegenständen eine Wand in Form eines bewegten Bandes
anzuordnen, welches die am Gegenstand vorbeigesprühten
Pulverteilchen abfängt. Im Falle der US-PS 2 232 561
ist das Band eine endlose, komplizierte Gliederkette, deren unteres Ende durch ein Reinigungsbad
läuft. Bei der US-PS 3 744 450 muß das endlose
umlaufende Band, welches als Pulverauffangwand hinter
dem zu beschichtenden Gegenstand angeordnet ist, bei
einem Farbwechsel (Wechsel von einem Pulver einer
Farbe auf ein anderes Pulver einer anderen Farbe)
ausgetauscht werden. Bei den US-PS 2 841 073 und
2 875 680 besteht die Wand aus einem nach unten
laufenden endlichen Band, das ausgewechselt werden
muß, wenn es von der Vorratsrolle abgelaufen ist.

c) Wenn ortsfeste Kabinenwände mit Durchtrittsöffnungen
für Luft verwendet werden, wie dies in den
CH-PS 560 558 und 581 503 vorgeschlagen wird, dann
bleiben die Kabinenwände sauber. Diese Konstruktion
hat jedoch den Nachteil, daß die durch die Wände
eintretende Spülluft sich mit dem Pulver-Luftgemisch
in der Beschichtungskabine vereinigt und somit die
Wirkung der Kabine vermindert. Die eintretende
Spülluft verdünnt die zum Beschichten der Gegenstände

- 4 -

dienende Pulverwolke. Ferner ergeben sich durch
die Spülluft Verwirbelungen und Ablagerungen in
strömungsmäßig "toten" Ecken. Ferner ist eine
große Menge an Spülluft und damit auch ein hoher
Energieverbrauch erforderlich.


d) Eine zwar technisch einfache, jedoch in der
praktischen Handhabung umständliche Lösung, um
das Reinigen der Kabinenwände zu vermeiden, besteht
gemäß dem deutschen Gebrauchsmuster Nr. 78 22 478
darin, in die Beschichtungskabine auswechselbare
Wände zu hängen, die bei einem Farb-bzw. Pulverwechsel ausgetauscht werden.


e) DE-OS 2 132 946 zeigt ein endloses luftdurchlässiges Band, welches sich über die Länge der
Beschichtungskabine erstreckt und in der Kabine
quer zu ihr über den Boden, die beiden Seitenwände und die Decke endlos umläuft. Unterhalb
dieses endlosen Bandes befindet sich ein
Transportband zum Abführen von überschüssigem
Pulver aus der Kabine. Das die inneren Kabinenwände bildende endlose Band transportiert kein
Pulver aus der Kabine heraus, sondern dient
zur Erzeugung einer Pulververwirbelung innerhalb der Kabine.


f) US-PS 2 509 276 zeigt eine Beschichtungskabine,
durch die zwischen einer geerdeten Kabinendecke und endlosen umlaufenden angetriebenen
Hochspannungselektroden eine zu beschichtende

- 5 -

Warenbahn hindurchläuft. Die Hochspannungselektroden befinden sich innerhalb einer oben offen U-förmigen Schlaufe einer endlos umlaufenden, geerdeten Gitterelektrode. Das Beschichten der unteren Warenbahnseite erfolgt durch eine zwischen den Hochspannungselektroden und der Gitterelektrode einerseits und der Warenbahn andererseits angeordnete Sprühvorrichtung. Das elektrische Feld der Hochspannungselektroden bewirkt, daß das Beschichtungsmaterial von den geerdeten Teilen angezogen wird, also größtenteils von der Warenbahn infolge der geerdeten Kabinendecke und ein überschüssiger Teil von der Gitterelektrode, von der das an ihr haftende Beschichtungsmaterial am unteren Kabinenende durch Bürsten und Schaber entfernt wird.

Durch die Erfindung soll die Aufgabe gelöst werden, möglichst ohne Zeitverlust für Reinigungsarbeiten nacheinander mit verschiedenen Beschichtungsmaterialien beschichten zu können, ohne daß Beschichtungsfehler, insbesondere Farbfehler, oder nachteilige Materialkonzentrationen oder Strömungen in der Beschichtungskabine entstehen. Dabei soll die Vorrichtung einfach und preisgünstig sein.

Diese Aufgabe wird gemäß der Erfindung dadurch gelöst, daß alle den Beschichtungsraum seitlich begrenzenden inneren Kabinenwände durch nach unten laufende Trümmer von antreibbaren endlosen Bändern gebildet oder abgedeckt sind, und daß am unteren Kabinenende eine Reinigungsvorrichtung zur Reinigung dieser seitlichen Förderbänder angeordnet ist.

- 6 -

Damit werden die Kabinenwände fortlaufend sauber gehalten.
Ein Wechsel des Beschichtungsmaterials ist ohne Reinigungsarbeiten und damit ohne Zeitverlust möglich. Es ergeben
sich weder Materialansammlungen, die schwer zu entfernen
sind oder explosionsgefährlich sind, noch nachteilige
Strömungen an Beschichtungsmaterial oder Luft in der
Beschichtungskabine. Elektroden zur Beeinflussung des
überschüssigen Beschichtungsmaterials können, brauchen
aber nicht vorhanden sein. Weitere Merkmale der Erfindung
ergeben sich aus den Schutzansprüchen.


Mehrere Ausführungsformen der Erfindung werden nachstehend
mit Bezug auf die Zeichnungen beschrieben. In diesen
zeigen

Fig.1    eine schematische, perspektivische
         Darstellung einer Beschichtungsvorrichtung
         nach der Erfindung für pulverförmiges
         Beschichtungsmaterial,

Fig.2    eine Einzelheit von Fig.1 in vergrößerter
         Darstellung,

Fig.3    eine Variante der Einzelheit von Fig.2 in
         perspektivischer Darstellung,

Fig.4    eine Umlenkrolle von Fig.1,

Fig.5    die Lage einer Sprühvorrichtung von Fig.1
         zwischen zwei Kabinenbändern,

Fig.6    eine Variante von Fig.5,

Fig.7    eine perspektivische Darstellung einer
         weiteren Ausführungsform der Erfindung.

- 7 -

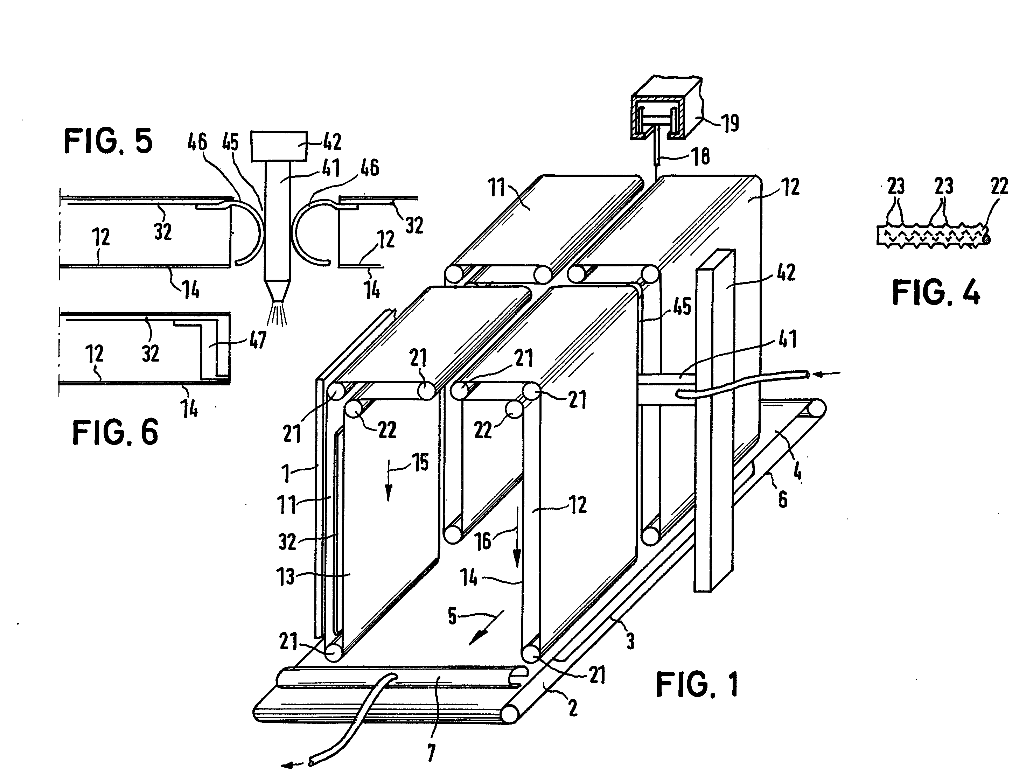

In Fig.1 sind die Seitenwände 1 einer Beschichtungskabine der Beschichtungsvorrichtung schematisch
angedeutet. Der Kabinenboden ist durch ein angetriebenes endloses Filterband 2 gebildet. Zwischen
den oberen und unteren Abschnitten des Filterbandes 2
befindet sich eine Wanne 3, die an eine nicht gezeigte
Unterdruckquelle angeschlossen ist. Der Unterdruck der
Wanne 3 hält am oberen Trum 4 des Filterbandes 2
anfallendes Pulver fest. Das obere Trum 4 bewegt sich
in Richtung des Pfeiles 5, das untere Bandtrum 6 in
entgegengesetzter Richtung. Am vorderen Ende des
oberen Bandtrumes 4 befindet sich eine Saugvorrichtung 7
zum Abziehen des auf dem Filterband 2 liegenden Pulvers.
Die Teile 2 bis 7 sind Bestandteil einer Pulverabführvorrichtung des Kabinenbodens, wie sie aus den
DE-PS 2 430 517 (=US-PS 3 902 455) und DE-AS 2 546 920
(=US-PS 3 918 641) bekannt ist.

Die Seitenlängswände und die Decke der Beschichtungskabine bestehen zumindest an der Kabineninnenseite
aus angetriebenen, endlosen Bänder 11 und 12 in der
aus Fig.1 ersichtlichen Anordnung. Es handelt sich
vorzugsweise um Filterbänder, damit ein Luftdurchlaß
möglich ist. Die Bänder 11 und 12 sind winkelförmig
angeordnet und werden so angetrieben, daß sich ihr
die Kabineninnenseite bildendes Bandtrum 13 bzw.14
an der Kabinendecke nach außen und an den Kabinenwänden in Richtung der Pfeile 15 bzw. 16 nach unten
bewegt. Der Antrieb der Bänder 2,11 und 12 kann
kontinuierlich oder diskontrinuierlich erfolgen.
An der Decke befindet sich zwischen den beiden Bändern
11 und 12 ein schlitzartiger Abstand 17, durch den die Aufhängevorrichtungen einer Transportvorrichtung 19
für die zu beschichtenden Gegenstände hindurchlaufen
können.

In Fig. 1 laufen die Bänder 11 und 12 nicht nur über
in ihnen angeordnete Umlenkrollen 21, sondern auch
über Umlenkrollen 22, die innerhalb der Kabine angeordnet sind. Letztere sind mit einer Kontur versehen,
beispielsweise mit örtlichen Erhebungen 23 entsprechend
Fig.4, damit ein Einquetschen von Pulver zwischen
diesen Umlenkrollen 22 und den Bändern 11 und 12 vermieden wird. Eine andere nicht dargestellte Ausführungsform kann auch darin bestehen, daß die Umlenkrollen
einen glatten Walzenmantel haben, der mit Ausnehmungen
und nur verhältnismäßig schmalen Stegen zwischen diesen
Ausnehmungen versehen ist.

Eine Reinigungsvorrichtung für die Bänder 11 und 12
besteht vorteilhafter Weise durch an ihren unteren
Enden im Bereich der Umlenkrollen 21 angeordnete Bürsten 25
und Druckgas-Blaseinrichtungen 26. Die Düsen 27 der
Blaseinrichtung 26 sind mit einem Winkel von weniger
als $45^o$, vorzugsweise mit einem Winkel zwischen $5^o$
und $12^o$, auf das Band 11 bzw.12 gerichtet, damit sich
zwischen ankommendem Druckgasstrahl und Wand ein Unterdruckbereich entsprechend dem Coanda-Effekt ergibt.
Die Saugwirkung des Unterdruckes zieht aus den Bändern
11 bzw.12 Farbteilchen heraus. Das von den Bändern 11
und 12 abgereinigte Pulver setzt sich auf dem Filterband 2 am Kabinenboden ab und wird von dort entsprechend
der genannten DE-PS 2 430 517 (=US-PS 3 902 455) entfernt und nach entsprechender Aufbereitung dem Pulverkreislauf zurückgeführt.

0021209

Eine andere Variante der Reinigung der Bänder 11
und 12 zeigt Fig.3. Hier ist nahe der unteren Umlenkrolle 21 an dem jeweiligen Band 11 bzw. 12 eine Absaugvorrichtung zum Abziehen von Pulver angeordnet.
Das abgezogene Pulver kann nach entsprechender Reinigung
ebenfalls dem Pulverkreislauf zurückgeführt werden, entsprechend der genannten DE-AS 5 546 920 (=US-PS 3 918 641).

Wie die Figuren 1 und 2 zeigen, befinden sich innerhalb
der Bänder 11 und 12 geerdete Metallplatten 32. Diese
sollen verhindern, daß sich elektrische Felder, die bei
der Sprühbeschichtung erzeugt werden, nach außen auswirken können.

Ein besonderes Problem sind die Kabinenschlitze, durch
welche die Sprühvorrichtung 41, welche normalerweise
die Form einer Pistole hat, in die Kabine eingeführt wird.
In den meisten Fällen wird diese Sprühvorrichtung 41
mittels eines Hubgetriebes 42 auf- und abbewegt, um eine
gleichmäßige Beschichtung zu erreichen. Das Problem wird
hier dadurch gelöst, daß längs der Beschichtungskabine
entsprechend Fig.1 mehrere Bänder 11 und 12 hintereinander angeordnet sind und zumindest zwischen den Bändern 12
ein Schlitz 45 zum Einführen der Sprühvorrichtung 41
in die Kabine freigelassen wird. Der Schlitz 45 ist seitlich durch Elemente 46 dicht abgeschlossen. Die Dichtungselemente 46 können an den geerdeten Platten 32 befestigt
sein und bestehen vorzugsweise aus Kunststoff, da Kunststoff auf das Beschichtungspulver eine abstoßende Wirkung
hat. Durch die abstoßende Wirkung des Kunststoffes und
durch die infolge des Unterdruckes in der Kabine durch
den Schlitz einströmende Luft wird dieser Teil der Beschichtungskabine verhältnismäßig sauber gehalten.

Die Schlitzbegrenzungselemente 46 können entsprechend Fig.5 die Form von bügelartigen Federn haben.Sie können aber auch entsprechend den Kunststoff-Elementen 47 in Fig.6 schienenartig ausgebildet sein. Federartige Elemente 46 haben den Vorteil, daß sie dichtend an der Sprühvorrichtung 41 anliegen können.Bei schienenartigen Elementen 47 kann dagegen die Abdichtung nur verbessert werden,wenn sie mit der Sprühvorrichtung 41 eine Art Labyrinthdichtung bilden.

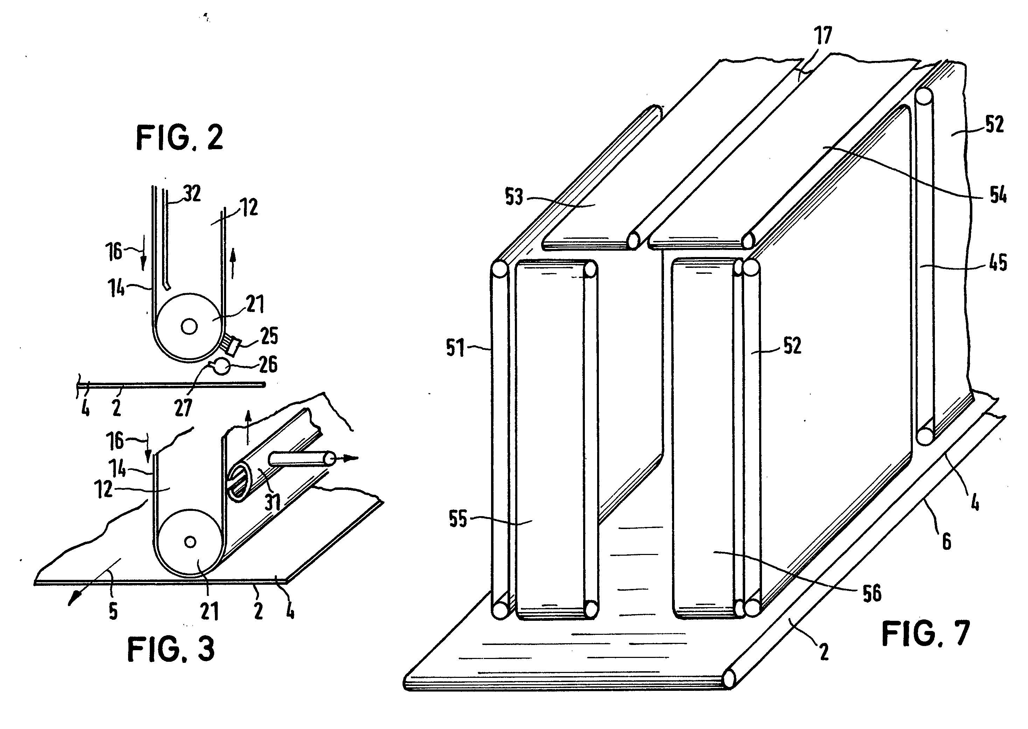

Bei der Ausführungsform nach Fig.7 sind gemäß der Erfindung getrennte Filterbänder 51 und 52 für die Kabinenlängswände, 53 und 54 für die Kabinendecke und zusätzliche Filterbänder 55 und 56 für die Kabinenstirnseiten vorgesehen.Damit ist die Beschichtungskabine nach allen Seiten optimal geschlossen und benötigt bei einem Wechsel von einem Pulver auf ein anderes Pulver ( Farbwechsel ) keine zusätzlichen Reinigungsarbeiten. Dadurch kann ein Farbwechsel ohne störende Stillstandszeiten durchgeführt werden. Die Deckenbänder 53 und 54 geben an ihnen anfallendes Pulver an die stirnseitigen Bänder 55 und 56 ab, von wo das Pulver auf das Filterband 2 am Kabinenboden gelangt. Die seitlichen Filterbänder 51 und 52 geben anfallendes Pulver in gleicher Weise an das Filterband 2 des Kabinenbodens ab. Für die Pulverübergabe von den oberen Bändern 53 und 54 auf die darunter angeordneten Bänder 55 und 56, ebenso wie für die Pulverübergabe von den Bändern 51,52,55 und 56 an das bodenseitige Band 2, können Reinigungsvorrichtungen 25 und 26 entsprechend Fig.2 verwendet werden. Auch kann bei allen Bändern eine Pulverabzugsvorrichtung 31 entsprechend Fig.3 vorgesehen sein. Zwischen den Bändern befinden sich wieder jeweils schlitzartige Abstände 45 bzw.17 für die Sprühvorrichtung 41 bzw.in der Decke für die an einem Kreisförderer angebrachten Aufhängevorrichtungen für die zu beschichtenden Gegenstände. Bezüglich der nicht gezeichneten Einzelheiten entspricht die Ausführungsform von Fig.7 der von den Figuren 1 bis 6.

unser Az.:PA 110                    Ernst Lehmann


31.05.1980



Patentansprüche


1. Sprühbeschichtungsvorrichtung, insbesondere für
   pulverförmiges bis körniges Beschichtungsmaterial,
   mit einer Beschichtungskabine zur Aufnahme der zu
   beschichtenden Gegenstände, die ein ihren Beschichtungsraum seitlich begrenzendes, antreibbares endloses
   Förderband mit einem im Beschichtungsraum nach unten
   laufenden Bandtrum sowie eine Abführvorrichtung für
   überschüssiges Beschichtungsmaterial am Kabinenboden aufweist,

   d a d u r c h   g e k e n n z e i c h n e t,

   daß alle den Beschichtungsraum seitlich begrenzenden
   inneren Kabinenwände durch nach unten laufende Trümmer
   (13,14) von antreibbaren endlosen Bändern (11,12;51,52
   55,56) gebildet oder abgedeckt sind, und daß am unteren
   Kabinenende eine Reinigungsvorrichtung (25,26) zur
   Reinigung dieser seitlichen Förderbänder angeordnet
   ist.

2. Vorrichtung nach Anspruch 1,

d a d u r c h   g e k e n n z e i c h n e t ,
daß die Kabinendecke innen durch mindestens
ein antreibbares endloses Band (11,12;53,54)
zum Abführen von anfallendem, überschüssigem
Beschichtungsmaterial abgedeckt oder gebildet
ist.

3. Vorrichtung nach Anspruch 1 oder 2,

d a d u r c h   g e k e n n z e i c h n e t ,
daß sich mindestens einige der Bänder (11,12)
der Kabinenwände bis über die innere Seite
der Kabinendecke erstrecken.

4. Vorrichtung nach einem der
Ansprüche 1 bis 3,

d a d u r c h   g e k e n n z e i c h n e t ,
daß die Abführvorrichtung (2 bis 7) am Kabinenboden ein sich im wesentlichen über den gesamten
Kabinenboden erstreckendes, antreibbares endloses Band (2) zur Aufnahme und Abfuhr von überschüssigem Beschichtungsmaterial aufweist.

5. Vorrichtung nach einem der Ansprüche 1 bis 4, d a d u r c h   g e k e n n z e i c h n e t, daß mindestens eines der Bänder (2,11,12;51 bis 56),insbesondere das Band (2) des Kabinenbodens, ein luftdurchläßiges, Pulver zurückhaltendes Filterband ist und auf dieses Filterband auf der vom Pulver abgewandten Bandseite eine im wesentlichen über die ganze Bandbreite reichende Unterdruckquelle (3) einwirkt.

6. Vorrichtung nach einem der Ansprüche 1 bis 5, d a d u r c h   g e k e n n z e i c h n e t, daß mindestens eines der Bänder (2,11,12; 51 bis 56) aus schwer entflammbarer, mit Gewebe verstärkter Kunstoff-Folie besteht.

7. Vorrichtung nach einem der Ansprüche 1 bis 6, g e k e n n z e i c h n e t   d u r c h eine Reinigungsvorrichtung mit einer Bürste (25) und/oder einer Druckgas-Blaseinrichtung (26) zur Reinigung der Kabinenwand-Bänder (11,12; 51,52,55,56) am unteren Kabinenendeund Abgabe des entfernten Beschichtungsmaterials an die Abzugs-·vorrichtung (2 bis 7) am Kabinenboden.

8. Vorrichtung nach Anspruch 7, d a d u r c h   g e k e n n z e i c h n e t, daß die Blaseinrichtung (26) mit einem Winkel von weniger als 45°, vorzugsweise mit einem Winkel zwischen 5° und 12°, auf das betreffende Band gerichtet ist, damit sich zwischen ankommendem Druckgasstrahl und Band ein Unterdruckbereich (Coanda-Effekt) bildet.

0021209

- 4 -

9. Vorrichtung nach einem der Ansprüche 1 bis 8,
   d a d u r c h   g e k e n n z e i c h n e t,
   daß eine Saugvorrichtung (31) zum Absaugen
   von Beschichtungsmaterial von den Bändern
   (11,12;51,52,55,56) der Kabinenwände vorgesehen ist.

10. Vorrichtung nach einem der Ansprüche 1 bis 10,
    d a d u r c h   g e k e n n z e i c h n e t,
    daß in der Kabine befindende Umlenkrollen (22)
    der Bänder am Rollenumfang mit einer Kontur
    versehen sind, durch welche die Bänder nur
    in verhältnismäßig kleinen Bereichen längs
    der Umlenkrollen abgestützt werden und ein
    Zusammenpressen von Beschichtungsmaterial
    zwischen den Umlenkrollen und den Bändern
    weitgehend vermieden wird.

11. Vorrichtung nach einem der Ansprüche 1 bis 10,
    d a d u r c h   g e k e n n z e i c h n e t,
    daß mindestens in einer der Bandschlaufen der
    seitlichen Bänder (11,12;51,52,55,56) eine
    geerdete Metallplatte (32) zum Abschirmen
    elektrischer Felder angeordnet ist.

12. Vorrichtung nach einem der Ansprüche 1 bis 11,
    d a d u r c h   g e k e n n z e i c h n e t,
    daß zwischen zwei benachbarten Bändern (12;52),
    vorzugsweise zwischen den vertikalen Trümmern
    der Bänder an den Kabinenwänden, ein Schlitz (45)

- 5 -

zum Einführen der Sprühvorrichtung (41) in
die Beschichtungskabine gebildet und vorzugsweise die Sprühvorrichtung längs dieses
Schlitzes verstellbar ist.

13. Vorrichtung nach Anspruch 12,
g e k e n n z e i c h n e t   d u r c h
den Schlitz (45) seitlich begrenzende Elemente
(46;47) aus Kunststoff.

FIG. 5

FIG. 6

FIG. 4

FIG. 1

1/2

0021209

FIG. 2

FIG. 3

FIG. 7

0021209

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | FR - A - 2 151 684 (PECOURT) <br> * Seiten 1-4; Figur 1 * <br> -- | 1,5, 7,9 | B 05 B 15/04 <br> B 05 C 15/00 |
| D | US - A - 3 744 450 (SHEILA HARDY) <br> * Das ganze Dokument * <br> -- | 1,5,7 | |
| | DE - A - 2 704 497 (OTTO MULLER OHG, MASCHINEN-UND TROCKNERBAU) <br> * Seiten 11,12; Seite 13, Absätze 1,2; Seite 16, Absatz 2; Figuren 1-3 * <br> -- | 2-5 | **RECHERCHIERTE SACHGEBIETE (Int. Cl.³)** <br><br> B 05 B <br> B 05 C |
| D | DE - B - 2 430 517 (GEMA AG) <br> * Spalte 6, Zeilen 64-68; Spalte 7, Zeilen 1-6; Spalte 8, Zeilen 11-14; Figuren 3,5 * <br> -- | 4,6 | |
| D | DE - B - 2 546 920 (GEMA AG) <br> * Spalte 6, Zeilen 22-64; Figur 1 * <br> -- | 4 | |
| D | CH - A - 581 503 (GEMA AG) <br> * Spalte 3, Zeilen 17-34; Figur 1 * <br> -- | 4,12 | |
| D | DE - A - 2 132 946 (SCHNEIDER) <br> * Das ganze Dokument * <br> -- ./. | 2,3 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-10-1980 | COLPAERT |

EPA form 1503.1 06.78

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | <u>FR - A - 1 337 865</u> (SAMES) . <br> * Seite 3, linke Spalte, Absatz 6; Figur 8a * <br><br> -- <br><br> <u>US - A - 3 942 420</u> (F.P. MARINO) <br> * Spalte 11, Zeilen 7-9; Figur 1 * <br><br> ---- | 11 <br><br><br><br><br> 12,13 | |
| | | | RECHERCHIERTE SACHGEBIETE (Int. Cl.³) |